# EUROPÄISCHE PATENTSCHRIFT

(11) **EP 3 206 932 B1**
(45) Veröffentlichungstag und Bekanntmachung des Hinweises auf die Patenterteilung: **24.07.2019**
(21) Anmeldenummer: 15762606.0
(22) Anmeldetag: 10.09.2015
(51) Int. Cl.: B61D 27/00, B60H 1/00

(54) **FAHRZEUGKÜHLANLAGE UND ZUGEHÖRIGES BETRIEBSVERFAHREN**
VEHICLE COOLING SYSTEM AND CORRESPONDING OPERATING METHOD
INSTALLATION DE REFROIDISSEMENT POUR VÉHICULE ET PROCÉDÉ DE FONCTIONNEMENT ASSOCIÉ

(30) Priorität: 17.10.2014 DE 102014221143
(43) Veröffentlichungstag der Anmeldung: 23.08.2017
(73) Patentinhaber: MAHLE International GmbH, 70376 Stuttgart (DE)
(72) Erfinder: FRANK, Stefan, 70839 Gerlingen (DE)
(74) Vertreter: BRP Renaud & Partner mbB Rechtsanwälte Patentanwälte Steuerberater
(86) Internationale Anmeldenummer: PCT/EP2015/070709
(87) Internationale Veröffentlichungsnummer: WO 2016/058759

(56) Entgegenhaltungen:
- DE-A1- 4 223 647
- DE-C2- 19 632 053

## Beschreibung

Die vorliegende Erfindung betrifft eine Fahrzeugkühlanlage, insbesondere für Schienenfahrzeuge, vorzugsweise in Form einer Unterflurkühlanlage sowie ein Verfahren zum Betreiben einer Fahrzeugkühlanlage in einem Fahrzeug.

Fahrzeugkühlanlagen kommen bei elektrisch angetriebenen Schienenfahrzeugen, sogenannten Triebwagen, zum Kühlen von Hauptkomponenten, wie zum Beispiel einer Leistungselektronik sowie eines Elektromotors, zum Einsatz. Hierzu kann die Fahrzeugkühlanlage einen Kühlkreis aufweisen, in dem ein flüssiges Kühlmittel zirkuliert und in den die Hauptkomponenten wärmeübertragend eingebunden sind. In diesem Kühlkreis ist außerdem ein Kühler eingebunden, der von Kühlluft durchströmbar ist, um die vom Kühlmittel aufgenommene Wärme an die Kühlluft abzugeben. Darüber hinaus ist es üblich, die Abluft des Kühlers zum Kühlen von Nebenkomponenten des Fahrzeugs, wie zum Beispiel Drosselspulen, Hilfstransformatoren, Hilfsmotoren und Schaltschränke, zu verwenden.

Aus der DE 196 32 053 C2 ist eine Fahrzeugkühlanlage bekannt, die einen Kühler eines Kühlkreises zum Kühlen einer Hauptkomponente des Fahrzeugs aufweist, wobei der Kühler von Kühlluft durchströmbar ist. Die bekannte Kühlanlage weist außerdem einen Zuführraum zum Zuführen der Kühlluft zu einer Eintrittsseite des Kühlers auf. Ferner ist ein Gebläseraum vorgesehen, der an einer Austrittsseite des Kühlers angeschlossen ist, in dem ein Gebläse angeordnet ist und der einen Hauptauslass für Kühlluft sowie einen Nebenauslass für Kühlluft aufweist. Während der Hauptauslass zu einer Umgebung des Fahrzeugs führt, ist der Nebenauslass mit einem Abluftkanal verbunden, in dem eine Nebenkomponente des Fahrzeugs angeordnet ist und der einen Abluftauslass für Kühlluft aufweist, der ebenfalls zur Umgebung des Fahrzeugs führt.

Um bei einem Ausfall des Gebläses dennoch eine ausreichende Kühlung für die jeweilige Hauptkomponente und insbesondere für die jeweilige Nebenkomponente gewährleisten zu können, ist es grundsätzlich möglich, die Fahrzeugkühlanlage hinsichtlich der Gebläse redundant auszulegen, so dass zumindest zwei Gebläse vorgesehen sind. Dabei kann es zweckmäßig sein, die beiden Gebläse in separaten Gebläseräumen anzuordnen, die jeweils an die Austrittsseite des Kühlers angeschlossen sind, jedoch separate Hauptauslässe aufweisen. Die beiden Gebläseräume stehen dann über separate Nebenauslässe mit dem Abluftkanal in Verbindung. Mit Hilfe einer Steuereinrichtung ist es dann grundsätzlich möglich, für einen Regelbetrieb beide Nebenauslässe zu öffnen, so dass beide Gebläse Kühlluft einerseits zum jeweiligen Hauptauslass und andererseits durch den Abluftkanal zur jeweiligen Nebenkomponente und durch den Abluftauslass fördern. Fällt nun eines der Gebläse aus, kann in einem Notbetrieb mit Hilfe der Steuereinrichtung der dem ausgeschalteten Gebläse zugeordneter Nebenauslass verschlossen werden, so dass das verbleibende eingeschaltete Gebläse Kühlluft einerseits durch den zugehörigen Hauptauslass und andererseits durch den zugehörigen Nebenauslass und durch den Abluftkanal zur jeweiligen Nebenkomponente und durch den Abluftauslass fördert. Problematisch bei einer derartigen Konfiguration ist der Umstand, dass die Aufteilung der vom jeweiligen Gebläse geförderten Kühlluft auf den zugehörigen Hauptauslass einerseits und auf den zugehörigen geöffneten Nebenauslass andererseits nur durch die unterschiedlichen Strömungswiderstände gesteuert ist. Um durch den deutlich längeren Strömungspfad vom jeweiligen Gebläse durch den zugehörigen Nebenauslass, durch den Abluftkanal, in dem die jeweilige Nebenkomponente durchströmt und/oder umströmt wird, sowie durch den Abluftauslass ausreichend Kühlluft fördern zu können, muss der durchströmbare Querschnitt des zugehörigen Hauptauslasses entsprechend klein dimensioniert werden, um hier einen entsprechenden Gegendruck zu erzeugen. Hierdurch wird jedoch letztlich die durch den Kühler strömende Luftmenge reduziert, was die Kühlleistung des Kühlers bzw. des zugehörigen Kühlkreises vermindert.

Die vorliegende Erfindung beschäftigt sich mit dem Problem, für eine derartige Fahrzeugkühlanlage, die mehrere Gebläseräume umfasst, sowie für ein zugehöriges Betriebsverfahren eine verbesserte Ausführungsform anzugeben, die sich insbesondere durch eine verbesserte Kühlleistung auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einer Fahrzeugkühlanlage, die stromab eines Kühlers wenigstens zwei Gebläse aufweist, für einen Regelbetriebszustand, bei dem beide Gebläse eingeschaltet sind, nur mit Hilfe des einen oder ersten Gebläses Kühlluft durch den Abluftkanal zu fördern, während mit Hilfe des anderen oder zweiten Gebläses Kühlluft nicht durch den Abluftkanal, sondern im Wesentlichen nur durch den zugehörigen Hauptauslass gefördert wird. Ein dem ersten Gebläse zugeordneter Hauptauslass wird im Folgenden als erster Hauptauslass bezeichnet, während der dem zweiten Gebläse zugeordnete Hauptauslass im Folgenden als zweiter Hauptauslass bezeichnet wird. Da im Regelbetriebszustand somit das zweite Gebläse nicht erforderlich ist, um Kühlluft durch den Abluftkanal zu fördern, kann der zweite Hauptauslass hinsichtlich seines von Kühlluft durchströmbaren Querschnitts deutlich größer dimensioniert werden als der dem ersten Gebläse zugeordnete erste Hauptauslass. Somit ist es durch eine vergleichsweise einfach und preiswert realisierbare Maßnahme möglich, zumindest für den Regelbetriebszustand, der die überwiegende Mehrheit aller Betriebszustände der Fahrzeugkühlanlage repräsentiert, die Kühlleistung der Fahrzeugkühlanlage zu vergrößern. Durch den größeren zweiten Hauptauslass lässt sich nämlich der gesamte vom zweiten Gebläse geförderte Luftstrom bei reduziertem Gegendruck abführen, so dass letztlich mehr Kühlluft durch den Kühler angesaugt werden kann. Dementsprechend verbessert sich die Kühlleistung des Kühlers bzw. des damit verbundenen Kühlkreises, ohne dass hierzu die elektrische Leistung des zweiten Gebläses vergrößert werden muss.

Fällt nun das erste Gebläse aus, lässt sich die hier vorgestellte Fahrzeugkühlanlage in einem ersten Notbetriebszustand betreiben, bei dem nunmehr das zweite Gebläse dazu verwendet wird, Kühlluft durch den Abluftkanal zu fördern. Da der zweite Hauptauslass größer ist als der erste Hauptauslass ist der im ersten Notbetriebszustand durch den Abluftkanal geförderte Luftstrom entsprechend geringer als während des Regelbetriebszustands, sofern das erste Gebläse und das zweite Gebläse hinsichtlich ihrer Leistung gleich sind. Die reduzierte Kühlleistung für die jeweilige Nebenkomponente ist jedoch für den ersten Notbetriebszustand akzeptabel, da es sich einerseits nur um Nebenkomponenten handelt und da andererseits der erste Notbetriebszustand nur selten und außerdem nur vergleichsweise kurzzeitig auftritt.

Fällt dagegen das zweite Gebläse aus, wird in einem zweiten Notbetriebszustand nur noch mit Hilfe des ersten Gebläses Kühlluft durch den Kühler angesaugt, die aber weiterhin wie im Regelbetriebszustand auf den ersten Hauptauslass und den Abluftkanal aufgeteilt wird. Somit steht für die jeweilige Nebenkomponente im Wesentlichen dieselbe Kühlleistung zur Verfügung.

Die erfindungsgemäße Lösung ist von besonderer Bedeutung, da lediglich durch eine veränderte Steuerung der Luftströme sowie durch einen vergrößerten zweiten Hauptauslass die Leistungsfähigkeit der Fahrzeugkühlanlage verbessert werden kann. Insbesondere ist es für diese Leistungssteigerung nicht erforderlich, den Kühler und/oder die Gebläse zu verändern.

Gemäß einer vorteilhaften Ausführungsform kann die Steuereinrichtung wenigstens ein verstellbares Stellglied zum Steuern der Nebenauslässe aufweisen, das abhängig von den Druckdifferenzen zwischen dem Abluftkanal und den Gebläseräumen druckgesteuert ist und außerdem passiv verstellbar ist. Mit anderen Worten, zum Verstellen des Stellglieds ist kein separater Stellantrieb erforderlich. Vielmehr erfolgt die Verstellung des Stellglieds durch die daran angreifenden Druckdifferenzen. Beispielsweise kann für den Regelbetriebszustand durch den vergrößerten zweiten Hauptauslass der Druck im zweiten Gebläseraum so weit abgesenkt werden, dass das Stellglied selbsttätig eine Stellung einnimmt, in der es den ersten Nebenauslass öffnet und den zweiten Nebenauslass verschließt. Dieselbe Stellung nimmt das Stellglied automatisch ein, wenn im zweiten Notbetriebszustand das zweite Gebläse ausfällt, so dass im zweiten Gebläseraum im Wesentlichen Umgebungsdruck oder sogar ein unterhalb des Umgebungsdrucks liegender Unterdruck herrscht. Fällt dagegen im ersten Notbetriebszustand das erste Gebläse aus, fällt der Druck im ersten Gebläseraum auf den Umgebungsdruck oder darunter ab, wodurch die Druckverhältnisse das Stellglied dazu zwingen, eine andere Stellung einzunehmen, in der es den ersten Nebenauslass verschließt und den zweiten Nebenauslass öffnet. Entscheidend für das passiv verstellbare Stellglied ist dabei die Dimensionierung des von der Kühlluft durchströmbaren Querschnitts des zweiten Hauptauslasses in Relation zu dem von Kühlluft durchströmbaren Querschnitt des ersten Hauptauslasses unter Berücksichtigung des Strömungswiderstands des Abluftkanals. Dementsprechend sind für das passiv arbeitende Stellglied die Strömungswiderstände von erstem Hauptauslass, zweitem Hauptauslass und Abluftkanal einschließlich der Durchströmung bzw. Umströmung der jeweiligen Nebenkomponente sowie des Durchströmungswiderstands des Abluftauslasses aufeinander abgestimmt, derart, dass im Regelbetriebszustand im zweiten Gebläseraum ein kleinerer Druck herrscht als im zweiten Gebläseraum und im Einlassbereich des Abluftkanals.

Gemäß einer anderen Ausführungsform kann der von Kühlluft durchströmbare Querschnitt des zweiten Hauptauslasses wenigstens doppelt so groß sein wie der von Kühlluft durchströmbare Querschnitt des ersten Hauptauslasses. Bei dieser Dimensionierung lässt sich insbesondere die vorstehend erläuterte passive Steuereinrichtung realisieren.

Bei einer anderen Ausführungsform können der von Kühlluft durchströmbare Querschnitt des ersten Hauptauslasses, der von Kühlluft durchströmbare Querschnitt des ersten Nebenauslasses und das erste Gebläse so aufeinander abgestimmt sein, dass im Regelbetriebszustand und im zweiten Notbetriebszustand vom ersten Gebläse angetriebene Kühlluft außerdem durch den ersten Hauptauslass strömt.

Zusätzlich oder alternativ kann vorgesehen sein, dass der von Kühlluft durchströmbare Querschnitt des zweiten Hauptauslasses, der von Kühlluft durchströmbare Querschnitt des zweiten Nebenauslasses und das zweite Gebläse so aufeinander abgestimmt sind, dass im ersten Notbetriebszustand vom zweiten Gebläse angetriebene Kühlluft außerdem durch den zweiten Hauptauslass strömt.

Besonders vorteilhaft ist eine Ausführungsform, bei welcher ein Gehäuse vorgesehen ist, das den Kühler, die Gebläseräume und einen Einlassabschnitt des Abluftkanals enthält. Hierdurch lässt sich eine besonders kompakte Bauform realisieren, die einerseits eine Vormontage der Fahrzeugkühlanlage ermöglicht und andererseits deren Integration in ein Fahrzeug vereinfacht.

Gemäß einer vorteilhaften Weiterbildung kann das jeweilige Gebläse ein im Gebläseraum angeordnetes Gebläserad und einen in einem Motorraum angeordneten Gebläsemotor zum Antreiben des Gebläserads aufweisen. Durch diese Bauweise lässt sich der Gebläsemotor vergleichsweise gut vor Verunreinigungen schützen, die im Kühlluftstrom mitgeführt sein können. Zweckmäßig kann dabei der jeweilige Motorraum gegenüber dem jeweiligen Gebläseraum und gegenüber dem Abluftkanal abgedichtet sein, so dass der jeweilige Motorraum nicht von Kühlluft durchströmt ist. Zweckmäßig ist der jeweilige Motorraum dabei ebenfalls im vorstehend genannten Gehäuse angeordnet. Alternativ kann ebenso vorgesehen sein, den jeweiligen Gebläsemotor ebenfalls im jeweiligen Gebläseraum anzuordnen. Ferner kann vorgesehen sein, den jeweiligen Gebläsemotor mit dem Abluftstrom zu kühlen, unabhängig davon, ob er ebenfalls im jeweiligen Gebläseraum oder in einem separaten Motorraum angeordnet ist.

Sofern zwei Gebläseräume und zwei Motorräume vorgesehen sind, kann der Abluftkanal zwischen den beiden Motorräumen hindurchführen, wodurch sich eine besonders kompakte, insbesondere flache, Bauform ergibt. Bevorzugt ist die Fahrzeugkühlanlage eine Unterflurkühlanlage für ein Schienenfahrzeug. Im Einbauzustand der Fahrzeugkühlanlage sind dann die Hauptauslässe und der jeweilige Abluftauslass nach unten offen. Sofern das Schienenfahrzeug ordnungsgemäß auf Schienen steht oder fährt, sind die Hauptauslässe und der jeweilige Abluftauslass somit zu einem Schienenbett hin offen.

Ein erfindungsgemäßes Betriebsverfahren für eine Fahrzeugkühlanlage mit zwei oder mehr Gebläsen charakterisiert durch die vorstehend angedeuteten wenigstens drei verschiedenen Betriebszustände, nämlich durch den Regelbetriebszustand, den ersten Notbetriebszustand und den zweiten Notbetriebszustand. Beim Regelbetriebszustand sind beide Gebläse eingeschaltet. Beim ersten Notbetriebszustand ist das erste Gebläse ausgefallen bzw. ausgeschaltet, während das zweite Gebläse eingeschaltet ist. Beim zweiten Notbetriebszustand ist dagegen das erste Gebläse eingeschaltet, während das zweite Gebläse ausgefallen bzw. ausgeschaltet ist. Während des Regelbetriebszustands wird beim erfindungsgemäßen Betriebsverfahren Kühlluft nur mit Hilfe des ersten Gebläses zu wenigstens einer zu kühlenden Nebenkomponente des Fahrzeugs geführt, während mit Hilfe des zweiten Gebläses Kühlluft nur unter Umgehung der jeweiligen Nebenkomponente in die Umgebung bzw. durch den zugehörigen zweiten Hauptauslass geführt wird. Beim ersten Notbetriebszustand wird dagegen das zweite Gebläse dazu genutzt, Kühlluft zur jeweligen Nebenkomponente zu führen. Im zweiten Notbetriebszustand wird das erste Gebläse dazu genutzt, Kühlluft zur jeweiligen Nebenkomponente zu führen.

Vorzugsweise arbeitet auch das Betriebsverfahren mit einer druckgesteuerten, passiven Steuereinrichtung, um die Luftströme innerhalb der Kühlanlage zu steuern.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Fahrzeugkühlanlage in einer Seitenansicht a und in einer Draufsicht b, jeweils während eines Regelbetriebszustands,
- Fig. 2: Ansichten a und b wie in Fig. 1, jedoch während eines ersten Notbetriebszustands,
- Fig. 3: Ansichten a und b wie in Fig. 1, jedoch während eines zweiten Notbetriebszustands.

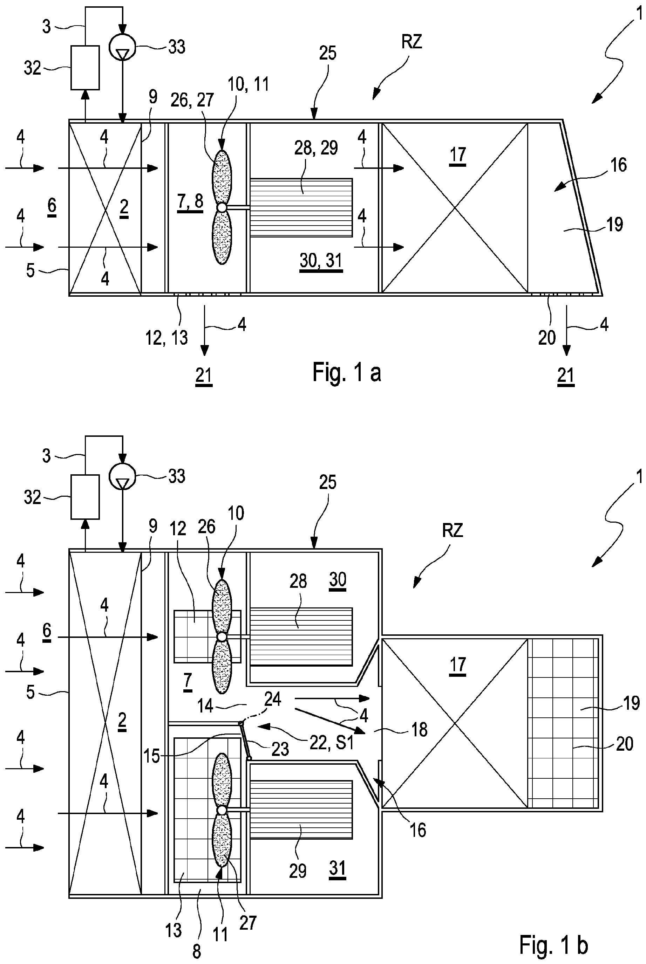

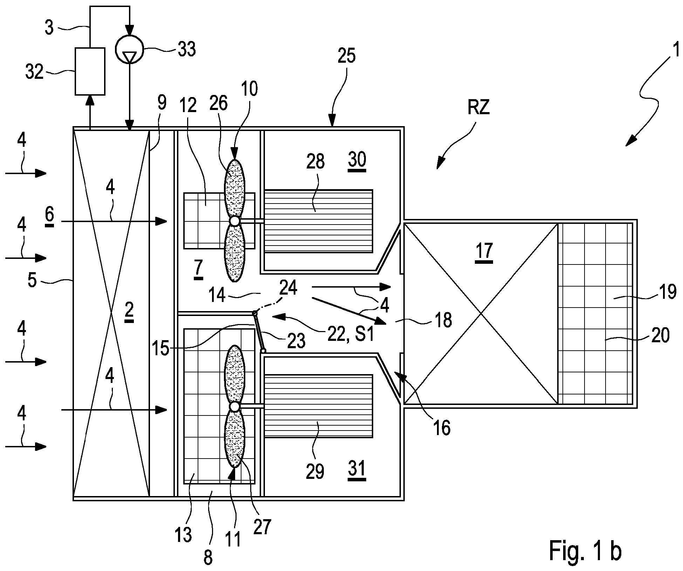

Entsprechend den Fig. 1-3 umfasst eine Fahrzeugkühlanlage 1, bei der es sich bevorzugt um eine Unterflurkühlanlage eines Schienenfahrzeugs handelt, zumindest einen Kühler 2, der in einen Kühlkreis 3 eingebunden ist, in dem ein vorzugsweise flüssiges Kühlmittel zirkuliert und der zum Kühlen wenigstens einer hier nur symbolisch dargestellten Hauptkomponente 32 des Fahrzeugs dient. Bei der Hauptkomponente 32 handelt es sich beispielsweise um eine Leistungselektronik oder um einen elektrischen Antriebsmotor des Fahrzeugs. Der Kühlkreis 3 enthält zum Antreiben des Kühlmittels eine Pumpe 33. Der Kühler 2 ist dabei entsprechend Pfeilen von Kühlluft 4 durchströmbar. Die Zuführung der Kühlluft 4 zu einer Eintrittsseite 5 des Kühlers 2 erfolgt dabei durch einen Zuführraum 6, der sich demnach stromauf des Kühlers 2 befindet.

Die Fahrzeugkühlanlage 1 weist außerdem mehrere Gebläseräume, nämlich einen ersten Gebläseraum 7 und einen zweiten Gebläseraum 8 auf. In den gezeigten Beispielen sind genau zwei Gebläseräume 7, 8 vorgesehen. Es ist klar, dass bei einer anderen Ausführungsform auch drei oder mehr Gebläseräume 7, 8 vorhanden sein können. Der jeweilige Gebläseraum 7, 8 ist jeweils an eine Austrittsseite 9 des Kühlers 2 fluidisch angeschlossen, so dass die Kühlluft 4 aus dem Kühler 2 in die Gebläseräume 7, 8 eintreten kann. Im jeweiligen Gebläseraum 7, 8 ist jeweils ein Gebläse 10, 11 angeordnet. Dabei ist ein erstes Gebläse 10 im ersten Gebläseraum 7 angeordnet, während ein zweites Gebläse 11 im zweiten Gebläseraum 8 angeordnet ist. Beide Gebläseräume 7, 8 weisen jeweils einen Hauptauslass 12, 13 für Kühlluft 4 sowie jeweils einen Nebenauslass 14, 15 für Kühlluft 4 auf. Dabei sind ein erster Hauptauslass 12 und ein erster Nebenauslass 14 dem ersten Gebläseraum 7 zugeordnet, während ein zweiter Hauptauslass 13 und ein zweiter Nebenauslass 15 dem zweiten Gebläseraum 8 zugeordnet sind.

Die Fahrzeugkühlanlage 1 umfasst ferner einen Abluftkanal 16, in dem zumindest eine zu kühlende Nebenkomponente 17 des Fahrzeugs angeordnet ist. Die jeweilige Nebenkomponente 17 kann dabei zum Beispiel eine elektrische Drosselspule oder ein Hilfstransformator oder ein elektrischer Hilfsmotor oder ein elektrischer Schaltschrank sein. Die Anordnung der jeweiligen Nebenkomponente 17 im Abluftkanal 16 erfolgt derart, dass die jeweilige Nebenkomponente 17 von Kühlluft 4 umströmbar und/oder durchströmbar ist, so dass die jeweilige Nebenkomponente 17 mit Hilfe der Kühlluft 4 gekühlt werden kann. Ein Einlassabschnitt 18 des Abluftkanals 16 ist fluidisch an den ersten Nebenauslass 14 und an den zweiten Nebenauslass 15 angeschlossen, so dass Kühlluft 4 von den Gebläseräumen 7, 8 in den Abluftkanal 16 einströmen kann. Der Abluftkanal 16 weist in einem Auslassabschnitt 19 zumindest einen Abluftauslass 20 auf, durch den die Kühlluft 4 ausströmen kann. Die jeweilige Nebenkomponente 17 ist im Beispiel zwischen dem Einlassabschnitt 18 und dem Auslassabschnitt 19 im Abluftkanal 16 angeordnet.

Die Hauptauslässe 12, 13 und der Abluftauslass 20 sind vorzugsweise jeweils zu einer Umgebung 21 der Fahrzeugkühlanlage 1 bzw. des damit ausgestatteten Fahrzeugs offen, so dass durch den jeweiligen Auslass 12, 13, 20 Kühlluft 4 in die Umgebung 21 austreten kann. Im Einbauzustand der Fahrzeugkühlanlage 1 sind die Hauptauslässe 12, 13 und der Abluftauslass 20 jeweils nach unten zur Umgebung 21 offen.

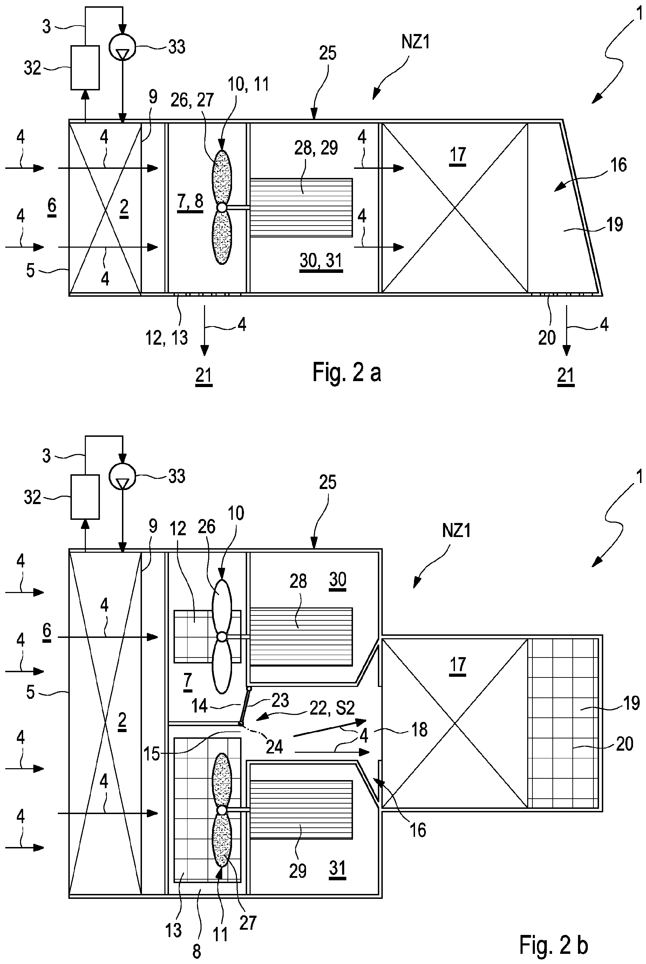

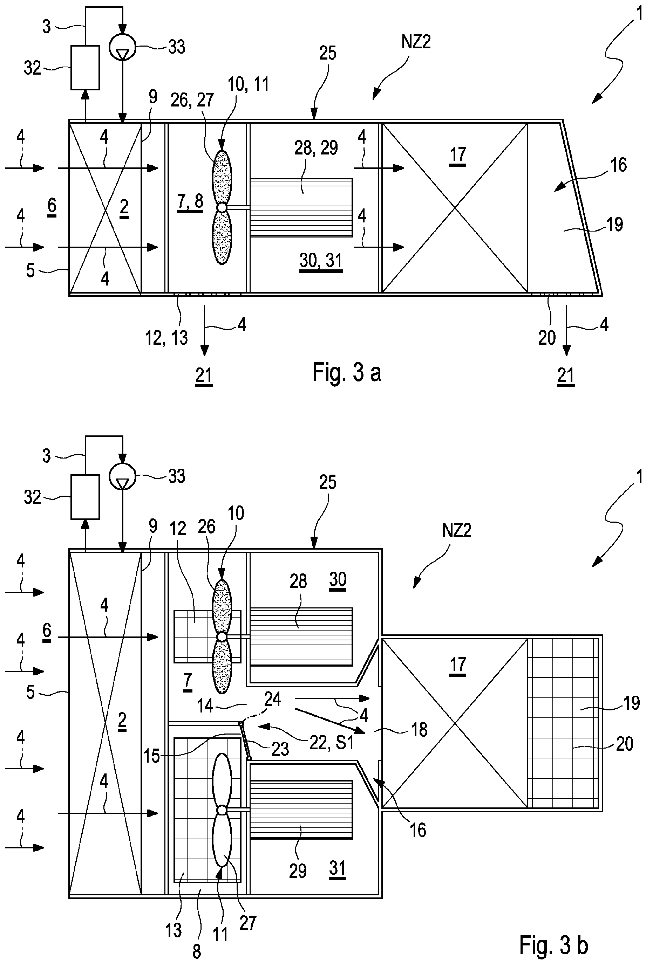

Die Fahrzeugkühlanlage 1 ist außerdem mit einer Steuereinrichtung 22 ausgestattet, die zum Steuern der Nebenauslässe 14, 15 hinsichtlich ihres durchströmbaren Querschnitts dient. Im Beispiel weist die Steuereinrichtung 22 ein klappenförmiges Stellglied 23 auf, das um eine Schwenkachse 24 zwischen einer in den Fig. 1b und 3b gezeigten ersten Schaltstellung S1 und einer in Fig. 2b gezeigten zweiten Schaltstellung S2 verschwenkbar ist. In der ersten Schaltstellung S1 gibt das Stellglied 23 den ersten Nebenauslass 14 frei, während es den zweiten Nebenauslass 15 versperrt. In der zweiten Schaltstellung S2 gibt das Stellglied 23 den zweiten Nebenauslass 15 frei, während es den ersten Nebenauslass 14 versperrt. Korrespondierend dazu lassen sich mit Hilfe der Steuereinrichtung 22 somit auch zwei Schaltzustände einstellen, die mit den Schaltstellung S1 und S2 des Stellglieds 23 korrespondieren und dementsprechend ebenfalls mit S1 bzw. S2 bezeichnet werden können. Im ersten Schaltzustand S1 der Steuereinrichtung 22 ist demnach der erste Nebenauslass 14 geöffnet, während der zweite Nebenauslass 15 verschlossen ist. Im zweiten Schaltzustand S2 ist dagegen der erste Nebenauslass 14 verschlossen, während der zweite Nebenanschluss 15 offen ist.

Wie sich den Fig. 1b, 2b und 3b entnehmen lässt, ist der zweite Hauptauslass 13 größer dimensioniert als der erste Hauptauslass 12. Dementsprechend weist der zweite Hauptauslass 13 einen größeren von Kühlluft 4 durchströmbaren Querschnitt auf als der erste Hauptauslass 12. In den gezeigten Darstellungen ist der durchströmbare Querschnitt des zweiten Hauptauslasses 13 mindestens doppelt so groß wie der durchströmbare Querschnitt des ersten Hauptauslasses 12.

Die Steuereinrichtung 22 ist nun so konfiguriert, dass sie für die Fahrzeugkühlanlage 1 zumindest drei verschiedene Betriebszustände realisieren kann, nämlich einen in den Fig. 1a und 1b gezeigten Regelbetriebszustand RZ, einen in den Fig. 2a und 2b gezeigten ersten Notbetriebszustand NZ1 und einen in den Fig. 3a und 3b gezeigten zweiten Notbetriebszustand NZ2.

Im Regelbetriebszustand RZ sind gemäß Fig. 1b das erste Gebläse 10 und das zweite Gebläse 11 eingeschaltet, so dass sie jeweils Frischluft 4 fördern. Im Regelbetriebszustand RZ bewirkt die Steuereinrichtung 22 ein Öffnen des ersten Nebenauslasses 14 und ein Verschließen des zweiten Nebenauslasses 15. Dementsprechend nimmt die Steuereinrichtung 22 ihren ersten Schaltzustand S1 ein. In der Folge kann vom ersten Gebläse 10 angetriebene Kühlluft 4 vom ersten Gebläseraum 7 durch den ersten Nebenauslass 14, durch den Abluftkanal 16 und durch den Abluftauslass 20 strömen. Hierbei erfolgt eine Umströmung bzw. Durchströmung der jeweiligen Nebenkomponente 17, wodurch diese dementsprechend gekühlt wird. Die vom zweiten Gebläse 11 angetriebene Kühlluft 4 strömt dagegen unter Umgehung des Abluftkanals 16 vom zweiten Gebläseraum 8 durch den zweiten Hauptauslass 13. Da der vergleichsweise große zweite Hauptauslass 13 nur einen relativ kleinen Durchströmungswiderstand besitzt, kann mit Hilfe des zweiten Gebläses 11 ein vergleichsweise großer Kühlluftstrom gefördert werden, was eine effiziente Kühlung des Kühlers 2 und somit des im Kühlkreis 3 zirkulierenden Kühlmittels bewirkt.

Im ersten Notbetriebszustand NZ1 ist gemäß Fig. 2b das erste Gebläse 10 ausgeschaltet, während das zweite Gebläse 11 eingeschaltet ist. Die Steuereinrichtung 22 bewirkt im ersten Notbetriebszustand NZ1 ein Verschließen des ersten Nebenauslasses 14 und ein Öffnen des zweiten Nebenauslasses 15. Dementsprechend nimmt die Steuereinrichtung 22 ihren zweiten Schaltzustand S2 ein bzw. ist das Stellglied 13 in die zweite Schaltstellung S2 verstellt. In der Folge strömt die vom zweiten Gebläse 11 angetriebene Kühlluft 4 vom zweiten Gebläseraum 8 durch den zweiten Nebenauslass 15, durch den Abluftkanal 16 und durch den jeweiligen Abluftauslass 20. Auch hierbei erfolgt eine Durchströmung bzw. Umströmung der jeweiligen im Abluftkanal 16 angeordneten Nebenkomponente 17. Da der zweite Hauptauslass 13 vergleichsweise groß ist und dementsprechend einen vergleichsweise geringen Durchströmungswiderstand besitzt, ist in diesem ersten Notbetriebszustand NZ1 die Durchströmung des Abluftkanals 16 mit Kühlluft 4 im Vergleich zum Regelbetriebszustand RZ deutlich reduziert. Dies kann jedoch für den vergleichsweise kurzzeitigen Notbetrieb in Kauf genommen werden.

Im zweiten Notbetriebszustand ist gemäß Fig. 3b das erste Gebläse 10 eingeschaltet, während das zweite Gebläse 11 ausgeschaltet ist. Im zweiten Notbetriebszustand NZ2 nimmt die Steuereinrichtung 22 wieder ihren ersten Schaltzustand S2 ein. Demnach ist das Stellglied 23 wieder in seine erste Schaltstellung S1 verstellt. In der Folge ist der Nebenauslass 14 wieder geöffnet, während der zweite Nebenauslass 15 wieder versperrt ist. Das erste Gebläse 10 treibt nun wieder Kühlluft 4 an, so dass diese vom ersten Gebläseraum 7 durch den ersten Nebenauslass 14, durch den Abluftkanal 16 und durch den Abluftauslass 20 strömt. Hierbei erfolgt eine Kühlung der jeweiligen Nebenkomponente 17 quasi wie im Regelbetriebszustand RZ.

Zweckmäßig arbeitet die Steuereinrichtung 22 fremdenergiefrei, nämlich druckgesteuert. Hierzu ist das Stellglied 23 passiv verstellbar, nämlich abhängig von den daran angreifenden Druckdifferenzen. Im Regelbetriebszustand RZ gemäß Fig. 1b und im zweiten Notbetriebszustand NZ2 gemäß Fig. 3b ist der Druck im ersten Gebläseraum 7 und im Einlassabschnitt 18 des Abluftkanals 16 größer als im zweiten Gebläseraum 8, wodurch das Stellglied 22 die erste Schaltstellung S1 zum Verschließen des zweiten Nebenauslasses 15 und zum Öffnen des ersten Nebenauslasses 14 selbsttätig einnimmt. Im ersten Notbetriebszustand NZ1 gemäß Fig. 2b ist dagegen der Druck im zweiten Gebläseraum 8 und im Einlassabschnitt 18 des Abluftkanals 16 größer als im ersten Gebläseraum 7, wodurch das Stellglied 23 automatisch in seine zweite Schaltstellung S2 verstellt wird, in der es den ersten Nebenauslass 14 verschließt und den zweiten Nebenauslass 15 freigibt.

Der erste Hauptauslass 12 und der zweite Hauptauslass 13 sind ungesteuert, also permanent offen. Sie sind jedoch hinsichtlich ihres durchströmbaren Querschnitts auf die Leistung des jeweiligen Gebläses 10, 11 sowie auf den Durchströmungswiderstand des Abluftkanals 16 so abgestimmt, dass jeweils auch eine Durchströmung des jeweiligen Hauptauslasses 12, 13 mit Kühlluft stattfindet, wenn das zugehörige Gebläse 10, 11 eingeschaltet ist.

Wie sich den Fig. 1 bis 3 entnehmen lässt, weist die Fahrzeugkühlanlage 1 außerdem ein Gehäuse 25 auf, das den Kühler 2, die Gebläseräume 7, 8 und zumindest den Einlassabschnitt 18 des Abluftkanals 16 enthält. Dabei sind die Gebläseräume 7, 8 horizontal nebeneinander angeordnet, so dass sie im Regelbetriebszustand RZ parallel durchströmt werden. Die Gebläse 10, 11 weisen jeweils ein Gebläserad, nämlich ein erstes Gebläserad 26 und ein zweites Gebläserad 27 sowie einen Gebläsemotor auf, nämlich einen ersten Gebläsemotor 28 und einen zweiten Gebläsemotor 29. Der erste Gebläsemotor 28 ist dabei in einem ersten Motorraum 30 angeordnet und dient zum Antreiben des ersten Gebläserads 26. Der zweite Gebläsemotor 29 dient zum Antreiben des zweiten Gebläserads 27 und ist in einem zweiten Motorraum 31 angeordnet. Die Motorräume 30, 31 sind fluidisch von den Gebläseräumen 7, 8 und vom Abluftkanal 16 getrennt, so dass sie von der Kühlluft 4 nicht durchströmt werden. Ferner sind die Motorräume 30, 31 vorzugsweise ebenfalls im Gehäuse 25 untergebracht.

Ein Verfahren zum Betreiben der Fahrzeugkühlanlage 1 lässt sich wie folgt zusammenfassen:
Im Regelbetriebszustand RZ gemäß den Fig. 1a und 1b sind das erste Gebläse 10 und das zweite Gebläse 11 eingeschaltet, so dass vom ersten Gebläse 10 angetriebene Kühlluft 4 vom Kühler 2 erst zur jeweiligen Nebenkomponente 17 und anschließend durch den Abluftauslass 20 geführt wird. Vom zweiten Gebläse 11 angetriebene Kühlluft 4 wird dabei nicht zur jeweiligen Nebenkomponente 17, sondern nur durch den zweiten Hauptauslass 13 geführt.

Gemäß den Fig. 2a und 2b sind im ersten Notbetriebszustand NZ1 das erste Gebläse 10 ausgeschaltet und das zweite Gebläse 11 eingeschaltet, wobei vom zweiten Gebläse 11 angetriebene Kühlluft 4 vom Kühler 2 erst zur jeweiligen Nebenkomponente 17 und anschließend durch den Abluftauslass 20 geführt wird. Gemäß den Fig. 3a und 3b sind im zweiten Notbetriebszustand NZ2 das erste Gebläse 10 eingeschaltet und das zweite Gebläse 11 ausgeschaltet, wobei vom ersten Gebläse 10 angetriebene Kühlluft 4 vom Kühler 2 erst zur jeweiligen Nebenkomponente 17 und anschließend durch den Abluftauslass 20 geführt wird. Da bei der hier vorgestellten Fahrzeugkühlanlage 1 die Steuereinrichtung 22 druckgesteuert arbeitet, bewirkt das Einschalten bzw. Ausschalten des jeweiligen Gebläses 10, 11 die zum Einstellen der jeweils gewünschten Schaltstellung S1 bzw. S2 des Stellglieds 23 bzw. des jeweiligen Schaltzustands S1 bzw. S2 der Steuereinrichtung 22 erforderliche Druckdifferenz am Stellglied 23. Somit kann insbesondere auf einen elektromotorischen Antrieb oder dergleichen für das Stellglied 23 verzichtet werden.

## Patentansprüche

1. Fahrzeugkühlanlage,
- mit wenigstens einem Kühler (2) eines Kühlkreises (3) zum Kühlen wenigstens einer Hauptkomponente (32) des Fahrzeugs, wobei der Kühler (2) von Kühlluft (4) durchströmbar ist,
- mit wenigstens zwei Gebläseräumen (7, 8), die jeweils an eine Austrittsseite (9) des wenigstens einen Kühlers (2) anschließen, in denen jeweils ein Gebläse (10, 11) angeordnet ist und die jeweils einen Hauptauslass (12, 13) für Kühlluft (4) sowie jeweils einen Nebenauslass (14, 15) für Kühlluft (4) aufweisen,
- mit wenigstens einem Abluftkanal (16), zum Zuführen von Kühlluft (4) zu wenigstens einer zu kühlenden Nebenkomponente (17) des Fahrzeugs, der an die Nebenauslässe (14, 15) angeschlossen ist,
- mit wenigstens einer Steuereinrichtung (22) zum Steuern eines von Kühlluft (4) durchströmbaren Querschnitts der Nebenauslässe (14, 15),
- wobei die Gebläseräume einen ersten Gebläseraum (7) mit einem ersten Gebläse (10), einem ersten Hauptauslass (12) und einem ersten Nebenauslass (14) sowie einen zweiten Gebläseraum (8) mit einem zweiten Gebläse (11), einem zweiten Hauptauslass (13) und einem zweiten Nebenauslass (15) umfassen,
- wobei der zweite Hauptauslass (13) einen größeren von Kühlluft (4) durchströmbaren Querschnitt aufweist als der erste Hauptauslass (12),
- wobei die Steuereinrichtung (22) so ausgestaltet und/oder programmiert ist, dass sie einen Betrieb der Fahrzeugkühlanlage (1) in einem Regelbetriebszustand (RZ) und in wenigstens zwei Notbetriebszuständen ermöglicht, die einen ersten Notbetriebszustand (NZ1) und einen zweiten Notbetriebszustand (NZ2) umfassen,
- wobei die Steuereinrichtung (22) im Regelbetriebszustand (RZ), bei dem das erste Gebläse (10) und das zweite Gebläse (11) eingeschaltet sind, den ersten Nebenauslass (14) öffnet und den zweiten Nebenauslass (15) verschließt, so dass vom ersten Gebläse (10) angetriebene Kühlluft (4) vom ersten Gebläseraum (7) durch den ersten Nebenauslass (14) und durch den Abluftkanal (16) strömt, während vom zweiten Gebläse (10) angetriebene Kühlluft (4) vom zweiten Gebläseraum (8) unter Umgehung des Abluftkanals (16) durch den zweiten Hauptauslass (13) strömt,
- wobei die Steuereinrichtung im ersten Notbetriebszustand (NZ1), bei dem das erste Gebläse (10) ausgeschaltet ist und das zweite Gebläse (11) eingeschaltet ist, den ersten Nebenauslass (14) verschließt und den zweiten Nebenauslass (15) öffnet, so dass vom zweiten Gebläse (11) angetriebene Kühlluft (4) vom zweiten Gebläseraum (8) durch den zweiten Nebenauslass (15) und durch den Abluftkanal (16) strömt,
- wobei die Steuereinrichtung (22) im zweiten Notbetriebszustand (NZ2), bei dem das erste Gebläse (10) eingeschaltet ist und das zweite Gebläse (11) ausgeschaltet ist, den ersten Nebenauslass (14) öffnet und den zweiten Nebenauslass (15) verschließt, so dass vom ersten Gebläse (10) angetriebene Kühlluft (4) vom ersten Gebläseraum (7) durch den ersten Nebenauslass (14) und durch den Abluftkanal (16) strömt.

2. Fahrzeugkühlanlage nach Anspruch 1,
**dadurch gekennzeichnet,**
**dass** die Steuereinrichtung (22) wenigstens ein verstellbares Stellglied (23) zum Steuern der Nebenauslässe (14, 15) aufweist, das abhängig von den Druckdifferenzen zwischen dem Abluftkanal (16) und den Gebläseräumen (7, 8) druckgesteuert und passiv verstellbar ist.

3. Fahrzeugkühlanlage nach Anspruch 1 oder 2,
**dadurch gekennzeichnet,**
**dass** der von Kühlluft (4) durchströmbare Querschnitt des zweiten Hauptauslasses (13) wenigstens doppelt so groß ist wie der von Kühlluft (4) durchströmbare Querschnitt des ersten Hauptauslasses (12).

4. Fahrzeugkühlanlage nach einem der Ansprüche 1 bis 3,
**dadurch gekennzeichnet,**
**dass** der von Kühlluft (4) durchströmbare Querschnitt des ersten Hauptauslasses (12), der von Kühlluft (4) durchströmbare Querschnitt des ersten Nebenauslasses (14) und das erste Gebläse (10) so aufeinander abgestimmt sind, dass im Regelbetriebszustand (RZ) und im zweiten Notbetriebszustand (NZ2) vom ersten Gebläse (10) angetriebene Kühlluft (4) außerdem durch den ersten Hauptauslass (12) strömt.

5. Fahrzeugkühlanlage nach einem der Ansprüche 1 bis 4,
**dadurch gekennzeichnet,**
**dass** der von Kühlluft (4) durchströmbare Querschnitt des zweiten Hauptauslasses (13), der von Kühlluft (4) durchströmbare Querschnitt des zweiten Nebenauslasses (15) und das zweite Gebläse (11) so aufeinander abgestimmt sind, dass im ersten Notbetriebszustand (NZ1) vom zweiten Gebläse (11) angetriebene Kühlluft (4) außerdem durch den zweiten Hauptauslass (13) strömt.

6. Fahrzeugkühlanlage nach einem der Ansprüche 1 bis 5,
**gekennzeichnet durch**
ein Gehäuse (25), das den Kühler (2), die Gebläseräume (7, 8) und zumindest einen Abschnitt (18) des Abluftkanals (16) enthält.

7. Fahrzeugkühlanlage nach Anspruch 6,
**dadurch gekennzeichnet,**
- **dass** das jeweilige Gebläse (10, 11) ein im jeweiligen Gebläseraum (7, 8) angeordnetes Gebläserad (26, 27) und einen in einem Motorraum (30, 31) angeordneten Gebläsemotor (28, 29) zum Antreiben des Gebläserads (26, 27) aufweist,
- **dass** der jeweilige Motorraum (30, 31) nicht von Kühlluft (4) durchströmt ist und im Gehäuse (25) angeordnet ist.

8. Fahrzeugkühlanlage nach einem der Ansprüche 1 bis 7,
**dadurch gekennzeichnet,**
**dass** die Fahrzeugkühlanlage (1) eine Unterflurkühlanlage für ein Schienenfahrzeug ist, wobei die Hauptauslässe (12, 13) und der jeweilige Abluftauslass (20) im Einbauzustand nach unten offen sind.

9. Verfahren zum Betreiben einer Fahrzeugkühlanlage (1) in einem Fahrzeug,
- wobei die Fahrzeugkühlanlage (1) wenigstens einen Kühler (2) eines Kühlkreises (3) zum Kühlen wenigstens einer Hauptkomponente (32) des Fahrzeugs und stromab davon wenigstens ein erstes Gebläse (10) und ein zweites Gebläse (11) aufweist,
- wobei stromab der Gebläse (10, 11) wenigstens eine zu kühlende Nebenkomponente (17) des Fahrzeugs angeordnet ist, der Kühlluft (4) vom ersten Gebläse (10) durch einen ersten Nebenauslass (14) und vom zweiten Gebläse (11) durch einen zweiten Nebenauslass (15) zuführbar ist,
- bei dem in einem Regelbetriebszustand (RZ), bei dem das erste Gebläse (10) und das zweite Gebläse (11) eingeschaltet sind, der erste Nebenauslass (14) geöffnet wird und der zweite Nebenauslass (15) geschlossen wird und vom ersten Gebläse (10) angetriebene Kühlluft (4) vom jeweiligen Kühler (2) zu einem ersten Hauptauslass (12) und durch den offenen ersten Nebenauslass (14) zur jeweiligen Nebenkomponente (17) geführt wird, und vom zweiten Gebläse (11) angetriebene Kühlluft vom jeweiligen Kühler (2) bei geschlossenem zweiten Nebenauslass (15) nicht zur jeweiligen Nebenkomponente (17), sondern durch einen zweiten Hauptauslass (13) geführt wird,
- bei dem in einem ersten Notbetriebszustand (NZ1), bei dem das erste Gebläse (10) ausgeschaltet ist und das zweite Gebläse (11) eingeschaltet ist, der erste Nebenauslass (14) geschlossen wird und der zweite Nebenauslass (15) geöffnet wird und vom zweiten Gebläse (11) angetriebene Kühlluft (4) vom jeweiligen Kühler (2) zum zweiten Hauptauslass (13) und durch den offenen zweiten Nebenauslass (15) zur jeweiligen Nebenkomponente (17) geführt wird,
- bei dem in einem zweiten Notbetriebszustand (NZ2), bei dem das erste Gebläse (10) eingeschaltet ist und das zweite Gebläse (11) ausgeschaltet ist, der erste Nebenauslass (14) geöffnet wird und der zweite Nebenauslass (15) geschlossen wird und vom ersten Gebläse (10) angetriebene Kühlluft (4) vom jeweiligen Kühler (2) zum ersten Hauptauslass (12) und durch den offenen ersten Nebenauslass (14) zur jeweiligen Nebenkomponente (17) geführt wird.

10. Verfahren nach Anspruch 9,
**dadurch gekennzeichnet,**
**dass** eine Steuereinrichtung (22) zum Steuern der Luftströme druckgesteuert wird und passiv arbeitet.

## Claims

1. A vehicle cooling system,
- comprising at least one cooling means (2) of a cooling circuit (3) for cooling at least one main component (32) of the vehicle, wherein the cooling means (2) can have cooling air (4) flowing through it,
- comprising at least two fan chambers (7, 8) which each adjoin an outlet side (9) of the at least one cooling means (2), in each of which one fan (10, 11) is arranged and which each have a main outlet (12, 13) for cooling air (4) and an ancillary outlet (14, 15) for cooling air (4),
- comprising at least one waste air channel (16) for supplying cooling air (4) to at least one ancillary component (17) of the vehicle to be cooled, which is connected to ancillary outlets (14, 15),
- comprising at least one control device (22) for controlling a cross-section of the ancillary outlets (14, 15) through which cooling air (4) can flow,
- wherein the fan chambers comprises a first fan chamber (7) with a first fan (10), a first main outlet (12) and a first ancillary outlet (14) as well as a second fan chamber (8) with a second fan (11), a second main outlet (13) and a second ancillary outlet (15),
- wherein the second main outlet (13) has a larger cross-section through which cooling air (4) can flow than the first main outlet (12),
- wherein the control device (22) is configured and/or programmed so that it enables operation of the vehicle cooling system (1) in a normal operating state (RZ) and in at least two emergency operating states comprising a first emergency operating state (NZ1) and a second emergency operating state (NZ2),
- wherein the control device (22) in the normal operating state (RZ) in which the first fan (10) and the second fan (11) are switched on, opens the first ancillary outlet (14) and closes the second ancillary outlet (15) so that cooling air (4) driven by the first fan (10) flows from the first fan chamber (7) through the first ancillary outlet (14) and through the waste air channel (16) whilst cooling air (4) driven by the second fan (10) flows from the second fan chamber (8) bypassing the waste air channel (16) through the second main outlet (13),
- wherein the control device in the first emergency operating state (NZ1) in which the first fan (10) is switched off and the second fan (11) is switched on closes the first ancillary outlet (14) and opens the second ancillary outlet (15) so that cooling air (4) driven by the second fan (11) flows from the second fan chamber (8) through the second ancillary outlet (15) and through the waste air channel (16),
- wherein the control device (22) in the second emergency operating state (NZ2) in which the first fan (10) is switched on and the second fan (11) is switched off, opens the first ancillary outlet (14) and closes the second ancillary outlet (15) so that cooling air (4) driven by the first fan (10) flows from the first fan chamber (7) through the first ancillary outlet (14) and through the waste air channel (16).

2. The vehicle cooling system according to claim 1,
**characterized in**
**that** the control device (22) comprises at least one adjustable actuator (23) for controlling the ancillary outlets (14, 15) which is adjustable in a pressure-controlled manner and passively depending on the pressure differences between the waste air channel (16) and the fan chambers (7, 8).

3. The vehicle cooling system according to claim 1 or 2,
**characterized in**
**that** the cross-section of the second main outlet (13) through which cooling air (4) can flow is at least twice as large as the cross-section of the first main outlet (12) through which cooling air (4) can flow.

4. The vehicle cooling system according to any one of claims 1 to 3,
**characterized in**
**that** the cross-section of the first main outlet (12) through which cooling air (4) can flow, the cross-section of the first ancillary outlet (14) through which cooling air (4) can flow, and the first fan (10) are matched to one another so that in the normal operating state (RZ) and in the second emergency operating state (NZ2) cooling air (4) driven by the first fan (10) also flows through the first main outlet (12).

5. The vehicle cooling system according to any one of claims 1 to 4,
**characterized in**
**that** the cross-section of the second main outlet (13) through which cooling air (4) can flow, the cross-section of the second ancillary outlet (15) through which cooling air (4) can flow, and the second fan (11) are matched to one another so that in the first emergency operating state (NZ1) cooling air (4) driven by the second fan (11) also flows through the second main outlet (13).

6. The vehicle cooling system according to any one of claims 1 to 5,
**characterized by**
a housing (25) which contains the cooling means (2), the fan chambers (7, 8) and at least one section (18) of the waste air channel (16).

7. The vehicle cooling system according to claim 6,
**characterized in**
- **that** the respective fan (10, 11) has a fan wheel (26, 27) arranged in the respective fan chamber (7, 8) and a fan motor (28, 29) arranged in a motor compartment (30, 31) for driving the fan wheel (26, 27),
- **that** the respective motor compartment (30, 31) does not have cooling air (4) flowing through it and is arranged in the housing (25).

8. The vehicle cooling system according to any one of claims 1 to 7,
**characterized in**
**that** the vehicle cooling system (1) is an underfloor cooling system for a rail vehicle, wherein the main outlets (12, 13) and the respective waste air outlet (20) are open downwards in the installed state.

9. A method for operating a vehicle cooling system (1) in a vehicle,
- wherein the vehicle cooling system (1) has at least one cooling means (2) of a cooling circuit (3) for cooling at least one main component (32) of the vehicle and downstream thereof at least one first fan (10) and a second fan (11),
- wherein at least one ancillary component (17) of the vehicle to be cooled is arranged downstream of the fan (10, 11), to which cooling air (4) can be supplied by the first fan (10) through a first ancillary outlet (14) and from the second fan (11) through a second ancillary outlet (15),
- wherein in a normal operating state (RZ) in which the first fan (10) and the second fan (11) are switched on, the first ancillary outlet (14) gets opened and the second ancillary outlet (15) gets closed and cooling air (4) driven by the first fan (10) is guided from the respective cooling means (2) to the first main outlet (12) and through the open first ancillary outlet (14) to the respective ancillary component (17) and cooling air driven by the second fan (11) is guided from the respective cooling means (2) when the second ancillary outlet (15) is closed not to the respective ancillary component (17) but through a second main outlet (13),
- wherein in a first emergency state (NZ1) in which the first fan (10) is switched off and the second fan (11) is switched on, the first ancillary outlet (14) gets closed and the second ancillary outlet (15) gets opened and cooling air (4) driven by the second fan (11) is guided from the respective cooling means (2) to the second main outlet (13) and through the open second ancillary outlet (15) to the respective ancillary component (17),
- wherein in a second emergency operating state (NZ2) in which the first fan (10) is switched on and the second fan (11) is switched off, the first ancillary outlet (14) gets opened and the second ancillary outlet (15) gets closed and cooling air (4) driven by the first fan (10) is guided from the respective cooling means (2) to the first main outlet (12) and through the open first ancillary outlet (14) to the respective ancillary component (17).

10. The method according to claim 9,
**characterized in**
**that** a control device (22) for controlling the air flows is pressure-controlled and operates passively.

## Revendications

1. Installation de refroidissement pour véhicule,
- avec au moins un refroidisseur (2) d'un circuit de refroidissement (3) pour le refroidissement d'au moins un composant principal (32) du véhicule, dans laquelle le refroidisseur (2) peut être traversé par de l'air de refroidissement (4),
- avec au moins deux espaces de soufflante (7, 8), qui se raccordent respectivement à un côté sortie (9) de l'au moins un refroidisseur (2), dans lesquels respectivement une soufflante (10, 11) est agencée et qui présentent respectivement une sortie principale (12, 13) pour l'air de refroidissement (4) ainsi que respectivement une sortie auxiliaire (14, 15) pour l'air de refroidissement (4),
- avec au moins un canal d'air évacué (16), pour l'amenée d'air de refroidissement (4) à au moins un composant auxiliaire à refroidir (17) du véhicule, qui est raccordé aux sorties auxiliaires (14, 15),
- avec au moins un dispositif de commande (22) pour la commande d'une section transversale pouvant être traversée par de l'air de refroidissement (4) des sorties auxiliaires (14, 15),
- dans laquelle les espaces de soufflante comprennent un premier espace de soufflante (7) avec une première soufflante (10), une première sortie principale (12) et une première sortie auxiliaire (14) ainsi qu'un deuxième espace de soufflante (8) avec une deuxième soufflante (11), une deuxième sortie principale (13) et une deuxième sortie auxiliaire (15),
- dans laquelle la deuxième sortie principale (13) présente une section transversale pouvant être traversée par de l'air de refroidissement (4) plus grande que la première sortie principale (12),
- dans laquelle le dispositif de commande (22) est configuré et/ou programmé de sorte qu'il permet un fonctionnement de l'installation de refroidissement pour véhicule (1) dans un état de fonctionnement normal (RZ) et dans au moins deux états de fonctionnement de secours, qui comprennent un premier état de fonctionnement de secours (NZ1) et un deuxième état de fonctionnement de secours (NZ2),
- dans laquelle le dispositif de commande (22) dans l'état de fonctionnement normal (RZ), dans lequel la première soufflante (10) et la deuxième soufflante (11) sont en circuit, ouvre la première sortie auxiliaire (14) et ferme la deuxième sortie auxiliaire (15), de sorte que l'air de refroidissement (4) entraîné par la première soufflante (10) s'écoule du premier espace de soufflante (7) par la première sortie auxiliaire (14) et par le canal d'air évacué (16), pendant que l'air de refroidissement (4) entraîné par la deuxième soufflante (10) s'écoule du premier espace de soufflante (8) en contournant le canal d'air évacué (16) par la deuxième sortie principale (13),
- dans laquelle le dispositif de commande dans le premier état de fonctionnement de secours (NZ1), dans lequel la première soufflante (10) est hors circuit et la deuxième soufflante (11) est en circuit, ferme la première sortie auxiliaire (14) et ouvre la deuxième sortie auxiliaire (15), de sorte que l'air de refroidissement (4) entraîné par la deuxième soufflante (11) s'écoule du deuxième espace de soufflante (8) par la deuxième sortie auxiliaire (15) et par le canal d'air évacué (16),
- dans laquelle le dispositif de commande (22) dans le deuxième état de fonctionnement de secours (NZ2), dans lequel la première soufflante (10) est en circuit et la deuxième soufflante (11) est hors circuit, ouvre la première sortie auxiliaire (14) et ferme la deuxième sortie auxiliaire (15), de sorte que l'air de refroidissement (4) entraîné par la première soufflante (10) s'écoule du premier espace de soufflante (7) par la première sortie auxiliaire (14) et par le canal d'air évacué (16),

2. Installation de refroidissement pour véhicule selon la revendication 1,
**caractérisée en ce**
**que** le dispositif de commande (22) présente au moins un organe de réglage réglable (23) pour la commande des sorties auxiliaires (14, 15), qui est réglable de manière passive et commandée par pression en fonction des différences de pression entre le canal d'air d'évacuation (16) et les espaces de soufflante (7, 8).

3. Installation de refroidissement pour véhicule selon la revendication 1 ou 2,
**caractérisée en ce**
**que** la section transversale pouvant être traversée par de l'air de refroidissement (4) de la deuxième sortie principale (13) est au moins deux fois aussi grande que la section transversale pouvant être traversée par de l'air de refroidissement (4) de la première sortie principale (12).

4. Installation de refroidissement pour véhicule selon l'une quelconque des revendications 1 à 3,
**caractérisée en ce**
**que** la section transversale pouvant être traversée par de l'air de refroidissement (4) de la première sortie principale (12), la section transversale pouvant être traversée par de l'air de refroidissement (4) de la première sortie auxiliaire (14) et la première soufflante (10) sont adaptées l'une à l'autre de sorte que dans l'état de fonctionnement normal (RZ) et dans le deuxième état de fonctionnement de secours (NZ2), l'air de refroidissement (4) entraîné par la première soufflante (10) s'écoule en outre par la première sortie principale (12).

5. Installation de refroidissement pour véhicule selon l'une quelconque des revendications 1 à 4,
**caractérisée en ce**
**que** la section transversale pouvant être traversée par de l'air de refroidissement (4) de la deuxième sortie principale (13), la section transversale pouvant être traversée par de l'air de refroidissement (4) de la deuxième sortie auxiliaire (15) et la deuxième soufflante (11) sont adaptées l'une à l'autre de sorte que dans le premier état de fonctionnement de secours (NZ1), l'air de refroidissement (4) entraîné par la deuxième soufflante (11) s'écoule en outre par la deuxième sortie principale (13).

6. Installation de refroidissement pour véhicule selon l'une quelconque des revendications 1 à 5,
**caractérisée par**
un boîtier (25), qui contient le refroidisseur (2), les espaces de soufflante (7, 8) et au moins une section (18) du canal d'air évacué (16).

7. Installation de refroidissement pour véhicule selon la revendication 6,
**caractérisée en ce**
- **que** la soufflante (10, 11) respective présente une roue de soufflante (26, 27) agencée dans l'espace de soufflante (7, 8) respectif et un moteur de soufflante (28, 29) agencé dans un compartiment moteur (30, 31) pour l'entraînement de la roue de soufflante (26, 27),
- **que** le compartiment moteur (30, 31) respectif n'est pas traversé par de l'air de refroidissement (4) et est agencé dans le boîtier (25).

8. Installation de refroidissement pour véhicule selon l'une quelconque des revendications 1 à 7,
**caractérisée en ce**
**que** l'installation de refroidissement pour véhicule (1) est une installation de refroidissement sous-plancher pour un véhicule ferroviaire, dans laquelle les sorties principales (12, 13) et la sortie d'air évacué (20) respective sont ouvertes vers le bas à l'état de montage.

9. Procédé de fonctionnement d'une installation de refroidissement pour véhicule (1) dans un véhicule,
- dans lequel l'installation de refroidissement pour véhicule (1) présente au moins un refroidisseur (2) d'un circuit de refroidissement (3) pour le refroidissement d'au moins un composant principal (32) du véhicule et en aval de celui-ci au moins une première soufflante (10) et une deuxième soufflante (11),
- dans lequel au moins un composant auxiliaire à refroidir (17) du véhicule, auquel de l'air de refroidissement (4) peut être amené de la première soufflante (10) par une première sortie auxiliaire (14) et de la deuxième soufflante (11) par une deuxième sortie auxiliaire (15), est agencé en aval de la soufflante (10, 11)
- dans lequel dans un état de fonctionnement normal (RZ), dans lequel la première soufflante (10) et la deuxième soufflante (11) sont en circuit, la première sortie auxiliaire (14) est ouverte et la deuxième sortie auxiliaire (15) est fermée et l'air de refroidissement (4) entraîné par la première soufflante (10) est guidé par le refroidisseur (2) respectif vers une première sortie principale (12) et par la première sortie auxiliaire ouverte (14) vers le composant auxiliaire (17) respectif, et l'air de refroidissement entraîné par la deuxième soufflante (11) est guidé par le refroidisseur (2) respectif lorsque la deuxième sortie auxiliaire (15) est fermée non pas vers le composant auxiliaire (17) respectif, mais pas une deuxième sortie principale (13),
- dans lequel dans un premier état de fonctionnement de secours (NZ1), dans lequel la première soufflante (10) est hors circuit et la deuxième soufflante (11) est en circuit, la première sortie auxiliaire (14) est fermée et la deuxième sortie auxiliaire (15) est ouverte et l'air de refroidissement (4) entraîné par la deuxième soufflante (11) est guidé par le refroidisseur (2) respectif vers la deuxième sortie principale (13) et par la deuxième sortie auxiliaire ouverte (15) vers le composant auxiliaire (17) respectif,
- dans lequel dans un deuxième état de fonctionnement de secours (NZ2), dans lequel la première soufflante (10) est en circuit et la deuxième soufflante (11) est hors circuit, la première sortie auxiliaire (14) est ouverte et la deuxième sortie auxiliaire (15) est fermée et l'air de refroidissement (4) entraîné par la première soufflante (10) est guidé par le refroidisseur (2) respectif vers la première sortie principale (12) et par la première sortie auxiliaire ouverte (14) vers le composant auxiliaire (17) respectif.

10. Procédé selon la revendication 9,
**caractérisé en ce**
**qu'**un dispositif de commande (22) est commandé par pression pour la commande des courants d'air et fonctionne de manière passive.
